# FASCICULE DE BREVET EUROPEEN

(11) **EP 0 832 565 B1**
(45) Date de publication et mention de la délivrance du brevet: **07.06.2000**
(21) Numéro de dépôt: 96202669.6
(22) Date de dépôt: 24.09.1996
(51) Int. Cl.: A23C 11/04, A23C 21/04

(54) **Substitut de lait et procédé de fabrication**
Milchaustauschprodukt und Verfahren zu dessen Herstellung
Milk substitute and process for preparing

(43) Date de publication de la demande: 01.04.1998
(73) Titulaire: SOCIETE DES PRODUITS NESTLE S.A., 1800 Vevey (CH)
(72) Inventeur: Wyss, Heinz, 3515 Oberdiessbach (CH); Engel, Hans, 3646 Einigen (CH); Kuslys, Martinas, 3506 Grosshoechstetten (CH)
(74) Mandataire: Archambault, Jean

(56) Documents cités:
- FR-A- 2 516 355
- US-A- 3 174 866
- US-A- 3 201 245
- FOOD HYDROCOLLOIDS, vol. 5, no. 3, 1991, pages 269-280, XP002021291 K. FLIGNER: "Accelerated tests for predicting long-term creaming stability of infant formula emulsion systems"
- FOOD HYDROCOLLOIDS, vol. 4, no. 2, 1990, pages 95-104, XP002021292 K. FLIGNER: "The effects of compositional factors on the short-time physical stability of a concentrated infant formula"
- DATABASE WPI Week 8249 Derwent Publications Ltd., London, GB; AN 77-48092y XP002021293 & JP-B-57 053 050 (SAHI DENKA KOGYO)

## Description

La présente invention concerne un substitut de lait dans lequel le lait est en partie substitué par du lactosérum. L'invention concerne également un procédé de fabrication d'un tel substitut de lait.

L'utilisation de lactosérum est connue dans la fabrication de produits laitiers. L'avantage d'utiliser le lactosérum comme substitut de lait est essentiellement lié à son prix bas. Cependant l'utilisation de lactosérum en remplacement du lait est une opération délicate. Il est en effet difficile d'assurer au produit une stabilité thermique et une bonne durée de conservation avec des protéines de lactosérum.

Le brevet US-A-3201245 concerne la préparation d'un substitut de lait concentré à une teneur en solides de 24,1 % par mélange d'une poudre de lactosérum électrodialysée, avec des solides de lait écrémé, du lactose, des graisses végétales et de l'eau.

Le brevet US-A-3174866 concerne la stabilisation d'un substitut de lait concentré à base de lait écrémé, de lactose et de graisses végétales par additon de carraghénates. L'utilisation d'un agent séquestrant du calcium n'est pas mentionnée ni l'addition de solides de lactosérum comme source de protéines.

Dans "Foods Hydrocolloids" 1991, No. 3, pages 269-280, on mentionne la stabilisation de substituts de lait concentrés par addition de carraghénates et de potassium citrate. Ces substituts de lait contiennent au maximum 5,74 % de solides de lait écrémé et au maximum 3,85 % de concentrat de protéines de lactosérum et une quantité importante, 14,4 %, de sucrose.

La demande de brevet EP-A-0627169 concerne un procédé de conditionnement du lait permettant d'atteindre partiellement ces objectifs fixés. Dans le cadre de cette demande de brevet, le produit à conditionner peut être sous forme de lait entier, de lait partiellement écrémé, de lait écrémé ou de lactosérum. Le conditionnement est effectué par la technique d'évaporation. Cependant, cette méthode ne présente pas que des avantages:
- Premièrement, elle n'est pas appropriée à l'obtention de lait reconstitué à partir de lait en poudre. Par conséquent, le conditionnement du lait doit être effectué le plus près possible du producteur de lait et du consommateur afin de réduire les frais de transport.
- Deuxièmement, ce procédé de conditionnement ne permet pas d'éviter la sédimentation après le conditionnement, en particulier lorsque l'on stérilise le produit.

Le substitut de lait selon l'invention pallie les inconvénients des produits connus. Il est caractérisé par le fait qu'il contient, en poids, environ 10 à 12 % de solides du lait écrémé, environ 5 à 9 % de solides de lactosérum, environ 68 à 80 % d'eau, environ 7 à 10 % de matière grasse, environ 0,01 à 0,03 % de carraghénates et environ 0,1 à 0,3 % d'agent séquestrant du calcium.

Un tel produit comporte une partie importante de lactosérum en remplacement du lait dans la composition du substitut de lait. Cette substitution permet une réduction importante des coûts des matières premières utilisées. Elle présente également l'avantage que la matière première de substitution a une origine lactique. Le lactosérum peut être substitué partiellement et de préférence jusqu'à concurrence d'environ la moitié par du lactose. Par la suite, dans le cadre de la présente demande de brevet, on comprendra sous le terme de "lactosérum" les concepts de lactosérum ou de lactosérum additionné de lactose, le lactosérum pouvant être par ailleurs plus ou moins déminéralisé.

Bien que le lactosérum soit présent en proportions importantes dans le substitut de lait, et ainsi les protéines sériques, la stabilité thermique du produit n'est pas amoindrie de ce fait, ce qui est inattendu. Ainsi, aux températures élevées, le substitut de lait réagit sensiblement comme le lait normal conditionné par les procédés classiques du point de vue de la couleur, du goût et de la consistance.

D'autre part, le substitut de lait ne présente pas ou présente peu d'ions calcium susceptibles de précipiter pour former un dépôt indésirable. En effet, les ions calcium libres sont ou bien tamponnés par l'agent séquestrant au moins partiellement dissocié, ou bien liés dans les micelles de caséine. Afin de favoriser la faible présence d'ions calcium dans le substitut de lait, il est en outre opportun d'utiliser de l'eau adoucie ou déminéralisée dans sa composition.

L'agent séquestrant ou sel de stabilisation est de préférence un phosphate ou citrate, par exemple le phosphate mono-, di- ou trisodique ou le citrate mono-, di- ou trisodique ou leurs mélanges.

L'invention concerne d'autre part un procédé de fabrication du substitut de lait précité, dans lequel on dissout les solides de lactosérum et les solides de lait, puis l'on traite thermiquement la solution, on l'homogénéise, on la conditionne et on la stérilise.

Le procédé de l'invention est caractérisé par le fait que, dans une première étape, l'on dissout des solides de lactosérum dans un milieu aqueux comprenant du carraghénate et un agent séquestrant le calcium, à une température d'environ 30 à 65°C, puis que l'on dissout des solides de lait écrémé dans la solution de lactosérum lors d'une deuxième étape en phase liquide à la même température et que l'on laisse s'humidifier les dits solides de lactosérum pendant 10 min. à 4 h, cette opération d'humidification pouvant avoir lieu avant ou après la dissolution des solides de lait écrémé.

Pour réaliser le substitut de lait, on utilise les quantités pondérales suivantes de matières premières: environ 10 à 12 % de poudre de lait écrémé, environ 5 à 9 % de poudre de lactosérum, environ 7 à 10 % de matière grasse qui peut être sélectionnée de préférence parmi l'huile de palme, l'huile de noix de coco, l'huile de maïs ou une combinaison de ces dernières. De plus il faut de préférence environ 0,1 à 0,3 % de lécithine, environ 0,02 à 0,03 % de carraghénate, environ 0,10 à 0,15 % d'agent séquestrant pour la dissolution et environ 0 à 0,15 % d'agent séquestrant pour la stérilisation, et environ 68 à 80 % d'eau adoucie ou de préférence d'eau déminéralisée.

La particularité de ce procédé réside dans le fait qu'aucune étape d'évaporation n'est prévue pour conditionner le substitut de lait à partir de poudres de lait et de poudre de lactosérum. Deux variantes de procédé sont envisageables pour réaliser le substitut de lait.

Une variante par charges successives comprend la dissolution de la poudre de lactosérum et de la poudre de lait chacune dans une cuve.

Une variante combinant une étape par charge et une étape en ligne suppose la dissolution de la poudre de lactosérumm dans une cuve et de la poudre de lait en ligne.

L'avantage de ce procédé est qu'il permet de garantir une stabilité en température du produit fini comparable à celle du lait, malgré la présence importante de protéines de lactosérum.

Avant de commencer à dissoudre les poudres de lait ou de lactosérum, il est nécessaire de préparer le milieux aqueux de dissolution. Il comprend, en poids, environ 68 à 80 % d'eau, environ 0,01 à 0,03 % de carraghénate et environ 0,1 à 0,15 % d'agent séquestrant. L'agent séquestrant et le carraghénate peuvent être incorporés à l'eau à une température de 30 à 65° C, de préférence à environ 60 à 65° C dans une première cuve de deux façons: par recirculation de l'eau à travers un distributeur de poudre amenant l'agent séquestrant et le carraghénate, ou alors par prédissolition séparée du carraghénate et de l'agent séquestrant dans une petite quantité d'eau avant de les mêlanger à l'ensemble de l'eau avec agitation modérée pour former le milieux aqueux de dissolution.

Deux méthodes sont envisageables pour incorporer la poudre de lactosérum à la solution aqueuse se trouvant dans la première cuve à 30 à 65° C, de préférence à environ 60 à 65° C. La solution est recirculée à travers un distributeur de poudres présentant la poudre de lactosérum, ou alors la poudre est ajoutée directement à la solution et dissoute sous agitation vigoureuse.

Après la dissolution du lactosérum dans le milieux aqueux, il est nécessaire de laisser reposer la solution lactosérique ainsi obtenue pendant 10 min. à 4 h, de préférence pendant 10 à 45 min. à une température d'environ 55 à 65° C. Ce temps de repos est nécessaire pour permettre la réhydratation des protéines sériques.

Une fois la réhydratation des protéines effectuée, la poudre de lait écrémé peut être incorporée à la solution lactosérique. Deux variantes sont envisageables pour assurer une bonne dissolution de la poudre de lait dans la solution lactosérique: la solution lactosérique peut être recirculée à partir d'une deuxième cuve au travers d'un distributeur de poudre amenant la poudre de lait, ou alors la poudre de lait peut être incorporée progressivement à la solution lactosérique lors d'une circulation en ligne.

Selon une variante, on peut prévoir de réhydrater les protéines sériques directement après la dissolution de la poudre de lait écrémé.

Avant de passer à la suite des opérations, une phase de dégazage par expansion à environ 45 à 50° C est recommandée. Après le dégazage, il faut préchauffer la solution lactique, de préférence à environ 60° C pour pouvoir y incorporer les matières grasses, notamment les huiles végétales. Les huiles végétales ainsi que la lécithine sont mélangées et préchauffées à environ 60 à 65° C. La phase grasse est ensuite intégrée à la solution lactique et mélangée, de préférence à l'aide d'un mélangeur statique ou d'un moulin colloïdal. Pour assurer la réhydratation et l'équilibrage de la solution, on la laisse reposer. La période de repos est de préférence environ 25 à 35 min. si l'opération est réalisée en cuve ou 15 à 20 min. si la poudre de lait est incorporée en ligne.

A la suite de ces opérations, on réalise une pasteurisation de la solution qui peut prendre deux formes. On peut effectuer une pasteurisation indirecte pendant environ 1 à 5 s. à environ 80 à 85° C, par exemple au moyen d'un échangeur tubulaire ou à plaques ou alors la réaliser de façon directe pendant environ 3 à 5 s. à environ 120 à 130° C par injection directe de vapeur. La pasteurisation est de préférence suivie d'une détente flash à environ 70 à 80° C.

Après la pasteurisation, on soumet de préférence la solution à une homogénéisation en deux étages qui peut s'effectuer à une température d'environ 70 à 75° C. Le premier étage est à une pression d'environ 190 à 210 bar, le deuxième est à environ 30 à 50 bar.

On abaisse avantageusement la température de la solution à environ 4 à 8° C. On prélève un échantillon afin de réaliser les tests de stérilisation à partir desquels les quantités d'eau et de sel de stabilisation à ajouter à la solution sont déterminées. Le sel de stabilisation, à raison de 0 à environ 0,15 % en poids est dissout dans de l'eau et incorporé dans la solution lactique pour assurer la standardisation de la dite solution.

Finalement, on remplit les récipients destinés à la vente avec le substitut de lait ainsi obtenu en s'assurant de laisser un espace vide au-dessus du niveau du liquide pour permettre d'agiter le contenu du récipient avant l'utilisation. La stérilisation est effectuée, de préférence, pendant environ 12 à 15 min. à environ 115 à 122° C après avoir préchauffé le produit à environ 95 à 97° C.

Les exemples ci-après illustrent l'invention. Dans ceux-ci, les pourcentages et parties sont en poids, sauf indication contraire.

### Exemple 1

Le procédé de fabrication du substitut de lait ci-après comprend une séquence batch-batch. Le substitut de lait est composé des ingrédients suivants dans les proportions indiquées:
- 10,9 % de poudre de lait écrémé,
- 7,2 % de poudre de lactosérum doux,
- 7,6 % d'huile de palme non-hydrogenée,
- 0,2 % de lécithine,
- 0,02 % de carraghénate,
- 0,24 % d'hydrogénophosphate disodique déshydraté (agent séquestrant),
- 73,84 % d'eau.

On dissout le carraghénate et 50 % de l'agent séquestrant dans une première cuve contenant de l'eau adoucie à 65° C en faisant recirculer l'eau à travers un distributeur de poudres contenant les deux ingrédients précités. On dissout la poudre de lactosérum de la même façon par recirculation de la même eau additionnée de carraghénate et d'agent séquestrant par le même distributeur de poudre contenant, cette fois, la poudre de lactosérum. Afin de permettre la réhydratation des protéines de lactosérum, il est important de laisser reposer la solution ainsi obtenue pendant une trentaine de minutes à 60° C.

Après avoir obtenu une solution à base de lactosérum, on y incorpore la poudre de lait écrémé à 55° C dans une seconde cuve par recirculation de la dite solution à travers un distributeur de poudre contenant la poudre de lait écrémé. Après cette opération, on dégaze la solution à 45° C.

L'étape suivante consiste à incorporer la lécithine et l'huile de palme à la solution lactique. Pour cela, on réchauffe la solution à 60° C. On mélange la lécithine à l'huile de palme et on chauffe le mélange à 65° C. On dose ensuite la phase grasse et on la mélange à la solution lactique à l'aide d'un mélangeur statique. Après cette opération, on laisse reposer le mélange pendant une trentaine de minutes à 55° C.

On effectue ensuite une pasteurisation à 85° C pendant 5 s. avant de soumettre la solution lactique à une homogénéisation en deux étages, dans le premier à 70°C à une pression de 200 bar, puis dans le second à 30 bar à la même température.

Afin de tester la stérilisation, on refroidit la solution lactique à 6° C. Sur la base du test de stérilisation, on standardise la solution à 26 % de matière sèche avec de l'eau déminéralisée contenant sous forme dissoute la quantité d'agent séquestrant nécessaire. Pour assurer une bonne dispersion de l'agent séquestrant, la solution doit être bien mélangée avant de passer à l'étape suivante.

On remplit ensuite des boîtes avec la solution lactique de façon continue et standard, en laissant un espace vide entre le liquide et le couvercle de la boîte. Après la phase de remplissage, on préchauffe le produit à 95° C, puis on le stérilise dans son emballage à 118° C pendant 15 min. Le substitut de lait en boîte ainsi obtenu est prêt à être mis en vente.

### Exemple 2

L'exemple suivant concerne un substitut de lait dont le procédé de fabrication comprend une séquence batch-ligne. Le substitut de lait est composé des ingrédients suivants dans les proportions indiquées:
- 10,6 % de poudre de lait écrémé,
- 7,2 % de poudre de lactosérum doux,
- 7,6 % d'huile de noix de coco,
- 0,8 % d'huile de maïs,
- 0,2 % de lécithie,
- 0,03 % de carraghénate,
- 0,24 % d'hydrogénophosphate disodique déshydraté (agent séquestrant),
- 73,33 % d'eau.

En premier lieu, on prédissout 50 % de l'agent séquestrant dans de l'eau, on prédissout le carraghénate dans de l'eau froide, puis on mélange les solutions d'agent séquestrant et de carraghénate à 65° C dans une cuve à l'aide d'un mélangeur sous agitation modérée.

On incorpore la poudre de lactosérum à la solution aqueuse obtenue précédemment à l'aide d'un mélangeur sous agitation vigoureuse. Après avoir incorporé la poudre de lactosérum, on laisse reposer la solution de lactosérum pendant une trentaine de minute à une température constante de 60° C.

On dissout ensuite la poudre de lait écrémé de façon continue en ligne dans le flux de la solution de lactosérum à 60° C. Après l'incorporation de la poudre de lait, on laisse reposer la solution à 50° C pour permettre le dégazage par expansion.

A la suite du dégazage, on mélange en continu à la solution lactique obtenue, avec un moulin colloïdal, les huiles de noix de coco et de maïs ainsi que la lécithine prémélangées et préchauffées à 65° C. Une circulation de 15 min. de la solution est prévue dans la tuyauterie avant de passer à l'étape suivante.

Après l'addition d'huile à la solution lactique, on effectue une pasteurisation directe à 125° C pendant 4 s., puis on soumet la solution lactique à une détente flash.

L'homogénéisation en deux étages ainsi que la suite des opérations sont semblables à celles décrites dans l'exemple 1.

## Revendications

1. Substitut de lait, contenant en poids, environ 10 à 12 % de solides du lait écrémé, environ 5 à 9 % de solides de lactosérum, environ 68 à 80 % d'eau, environ 7 à 10 % de matière grasse, environ 0,01 à 0,03 % de carraghénates et environ 0,1 à 0,3 % d'agent séquestrant du calcium.

2. Substitut de lait selon la revendication 1, caractérisé par le fait que les ions Ca²⁺ libres sont soit tamponnés par un sel de stabilisation au moins partiellement dissocié, soit liés à la micelle de caséine, soit dans une combinaison des deux états.

3. Substitut de lait selon l'une des revendications 1 et 2, caractérisé par le fait que le lactosérum est substitué jusqu'à concurrence de la moitié, en poids, par du lactose.

4. Procédé de fabrication d'un substitut de lait selon la revendication 1, dans lequel on dissout les solides de lactosérum et les solides de lait, puis l'on traite thermiquement la solution, on l'homogénéise, on la conditionne et on la stérilise, caractérisé par le fait que, dans une première étape, l'on dissout des solides de lactosérum dans un milieu aqueux comprenant du carraghénate et un agent séquestrant du calcium, à une température d'environ 30 à 65° C, puis que l'on dissout des solides de lait écrémé dans la solution de lactosérum lors d'une deuxième étape en phase liquide à la même température et que l'on laisse s'humidifier les dits solides de lactosérum pendant 10 min. à 4 h, cette opération d'humidification pouvant avoir lieu avant ou après la dissolution des solides de lait écrémé.

5. Procédé selon la revendication 4, caractérisé par le fait que la dissolution du carraghénate et de l'agent séquestrant a lieu en batch, que le carraghénate est d'abord dissout dans de l'eau froide, que l'agent séquestrant est dissout séparément avant d'être intégré à une cuve contenant la totalité de l'eau et comprenant un mélangeur sous agitation modérée à environ 60 à 65° C.

6. Procédé selon la revendication 4, caractérisé par le fait que la dissolution de l'agent séquestrant et du carraghénate est effectuée dans une cuve en batch depuis laquelle la solution aqueuse recircule à travers un distributeur de poudre délivrant l'agent séquestrant et le carraghénate.

7. Procédé selon la revendication 4, caractérisé par le fait que la dissolution des solides de lactosérum dans la solution aqueuse a lieu dans une cuve en batch par la recirculation de la solution à travers un distributeur de poudre délivrant la poudre de lactosérum.

8. Procédé selon la revendications 4, caractérisé par le fait que la dissolution des solides de lactosérum dans la solution aqueuse a lieu dans une cuve en batch par agitation vigoureuse de la solution aqueuse à laquelle la poudre de lactosérum est incorporée.

9. Procédé selon l'une des revendications 4 à 8, caractérisé par le fait que la dissolution des solides de lait écrémé dans la solution de lactosérum a lieu dans une cuve en batch par la recirculation de la solution à travers un distributeur de poudre délivrant la poudre de lait écrémé.

10. Procédé selon l'une des revendications 4 à 8, caractérisé par le fait que la dissolution des solides de lait écrémé dans la solution de lactosérum est effectuée en ligne par incorporation continue des solides de lait écrémé dans la solution.

## Patentansprüche

1. Milchersatzstoff, der etwa 10 bis 12 Gew.-% Magermilchfeststoffe, etwa 5 bis 9 Gew.-% Molkefeststoffe, etwa 68 bis 80 Gew.-% Wasser, etwa 7 bis 10 Gew.-% eines Fetts, etwa 0,01 bis 0,03 Gew.-% Carrageenate und etwa 0,1 bis 0,3 Gew.-% eines Calcium-Sequestrierungsmittels enthält.

2. Milchersatzstoff nach Anspruch 1, dadurch gekennzeichnet, daß die freien Ca²⁺-Ionen entweder mit einem Stabilisierungssalz, das wenigstens teilweise dissoziiert ist, abgepuffert sind, oder mit der Caseinmicelle verbunden sind, oder in einer Kombination der beiden Zustände vorliegen.

3. Milchersatzstoff nach einem der Ansprüche 1 und 2, dadurch gekennzeichnet, daß die Molke bis zur Hälfte in Gewicht durch Lactose ersetzt ist.

4. Verfahren zur Herstellung eines Milchersatzstoffs nach Anspruch 1, bei dem man die Molkefeststoffe und die Milchfeststoffe auflöst, dann die Lösung thermisch behandelt, homogenisiert, verpackt und sterilisiert, dadurch gekennzeichnet, daß man in einer ersten Stufe die Molkefeststoffe in einem wässrigen Medium, das Carrageenat und ein Calcium-Sequestrierungsmittel enthält, bei einer Temperatur von etwa 30 bis 65°C auflöst, daß man dann die Magermilchfeststoffe in der Molkelösung in einer zweiten Stufe in flüssiger Phase bei der gleichen Temperatur auflöst, und daß man die Molkefeststoffe innerhalb von 10 Minuten bis zu 4 Stunden befeuchten läßt, wobei dieser Befeuchtungsvorgang vor oder nach der Auflösung der Magermilchfeststoffe stattfinden kann.

5. Verfahren nach Anspruch 4, dadurch gekennzeichnet, daß die Auflösung des Carrageenats und des Sequestrierungsmittels ansatzweise erfolgt, wobei das Carrageenat zuerst in kaltem Wasser gelöst wird, das Sequestrierungsmittel getrennt davon gelöst wird, bevor es in einen Behälter eingeführt wird, der das gesamte Wasser enthält und einen Mischer mit langsamer Rührung bei etwa 60 bis 65°C aufweist.

6. Verfahren nach Anspruch 4, dadurch gekennzeichnet, daß die Auflösung des Sequestrierungsmittels und des Carrageenats in einem ansatzweise betriebenen Behälter durchgeführt wird, in dem die wässrige Lösung durch einen Pulververteiler zirkuliert, der das Sequestrierungsmittel und das Carrageenat abgibt.

7. Verfahren nach Anspruch 4, dadurch gekennzeichnet, daß die Auflösung der Molkefeststoffe in der wässrigen Lösung in einem ansatzweise betriebenen Behälter unter Zirkulation der Lösung durch einen Pulververteiler, der das Molkepulver abgibt, durchgeführt wird.

8. Verfahren nach Anspruch 4, dadurch gekennzeichnet, daß die Auflösung der Molkefeststoffe in der wässrigen Lösung in einem ansatzweise betriebenen Behälter unter heftigem Rühren der wässrigen Lösung, in die das Molkepulver eingearbeitet wird, durchgeführt wird.

9. Verfahren nach einem der Ansprüche 4 bis 8, dadurch gekennzeichnet, daß die Auflösung der Magermilchfeststoffe in der Molkelösung in einem ansatzweise betriebenen Behälter unter Zirkulation der Lösung durch einen Pulververteiler, der das Magermilchpulver abgibt, durchgeführt wird.

10. Verfahren nach einem der Ansprüche 4 bis 8, dadurch gekennzeichnet, daß die Auflösung der Magermilchfeststoffe in der Molkelösung in der Produktionslinie als kontinuierliche Einarbeitung der Magermilchfeststoffe in die Lösung durchgeführt wird.

## Claims

1. Milk substitute containing, by weight, approximately 10 to 12 % skimmed milk solids, approximately 5 to 9 % whey solids, approximately 68 to 80 % water, approximately 7 to 10 % fats, approximately 0.01 to 0.03 % carrageenates and approximately 0.1 to 0.3 % of a calcium sequestering agent.

2. Milk substitute according to claim 1, characterized in that the free Ca²⁺ ions are either buffered by an at least partially dissociated stabilizing salt, or bound to the casein micelle, or are in a combination of the two states.

3. Milk substitute according to one of claims 1 and 2, characterized in that whey is substituted to the extent of half its weight by lactose.

4. Process for manufacturing a milk substitute according to claim 1, wherein the whey solids and milk solids are dissolved and the solution is then heat treated, homogenized, packaged and sterilized, characterized in that, in a first step, whey solids are dissolved in an aqueous medium comprising carrageenate and a calcium sequestering agent, at a temperature of approximately 30 to 65°C, and skimmed milk solids are then dissolved in the whey solution in a second step in the liquid phase at the same temperature and in that the said whey solids are allowed to humidify for 10 min to 4 h, it being possible for this humidification operation to occur before or after the skimmed milk solids are dissolved.

5. Process according to claim 4, characterized in that the carrageenate and calcium sequestering agent are dissolved in batches, in that the carrageenate is first of all dissolved in cold water, and in that the sequestering agent is dissolved separately before being incorporated in a vat containing all the water and having a stirrer, this taking place with moderate stirring at approximately 60 to 65°C.

6. Process according to claim 4, characterized in that the sequestering agent and the carrageenate are dissolved in batches in a vat from which the solution recirculates through a powder distributor delivering the sequestering agent and carrageenate.

7. Process according to claim 4, characterized in that whey solids are dissolved in the aqueous solution in a vat in batches by recirculating the solution through a powder distributor delivering the whey powder.

8. Process according to claim 4, characterized in that whey solids are dissolved in an aqueous solution in a vat in batches with vigorous stirring of the aqueous solution in which the whey powder is incorporated.

9. Process according to one of claims 4 to 8,
characterized in that the skimmed milk solids are dissolved in the whey solution in a vat in batches by recirculating the solution through a powder distributor delivering the skimmed milk powder.

10. Process according to one of claims 4 to 8,
characterized in that the skimmed milk solids are dissolved in the whey solution in-line by continuously incorporating the skimmed milk solids in the solution.
